# EUROPÄISCHE PATENTANMELDUNG

(11) **EP 2 926 667 A1**
(43) Veröffentlichungstag der Anmeldung: **07.10.2015**
(21) Anmeldenummer: 14163132.5
(22) Anmeldetag: 02.04.2014
(51) Int. Cl.: A23G 1/12, B02C 4/04

(54) **Walzenreibmaschine zum Vermahlen von teigig-pastösen Lebensmittelmassen**

(71) Anmelder: BSA Schneider Anlagentechnik GmbH, 52070 Aachen (DE)
(72) Erfinder: Werschkull, Rolf-Dieter-Gernot, 4720 Kelmis (BE)
(74) Vertreter: Bauer, Dirk

(57) **Zusammenfassung**

Die Erfindung betrifft eine Walzenreibmaschine (1) zum Vermahlen einer teigig-pastösen Lebensmittelmasse mit mehreren parallel zueinander ausgerichteten, hinter- und/oder übereinander in einem Maschinengestell (5) angeordneten Walzen (2, 102), die mit Hilfe mindestens einer Antriebseinrichtung um eine Walzenachse (4) drehantreibbar sind, so dass die zu vermahlende Lebensmittelmasse in Form eines zusammenhängenden Produktfilms durch zumindest einen zwischen zwei benachbarten Walzen (2, 102) befindlichen Walzenspalt (20) förderbar ist, wodurch ein Vermahlen der Lebensmittelmasse erfolgt, wobei die Walzenreibmaschine (1) einen Produktbereich (9, 109) aufweist, in dem die zu vermahlende Lebensmittelmasse mit Oberflächen sowohl mindestens einer der Walzen (2, 102) als auch von Begrenzungswänden (8, 108) in Kontakt kommt wobei jede Walze (2, 102) an gegenüberliegenden Endabschnitten (13) jeweils einen Lagerabschnitt (7) aufweist, mit dem sich die Walze (2, 102) jeweils in einen Lagerbereich (7) der Walzenreibmaschine (1), insbesondere deren Maschinengestells (5), hinein erstreckt, wobei die Lagerbereiche (7) von dem Produktbereich (9, 109) abgetrennt sind und jeweils zwei Durchführungen (15) jeder Walze (2, 102) von dem Produktbereich (9, 109) in die der jeweiligen Walze (2, 102) zugeordneten Lagerbereiche (7) gegen einen Durchtritt der zu vermahlenden Lebensmittelmasse abgedichtet sind.

Um die Walzenreibmaschine (1) dahingehend weiterzuentwickeln, dass Verunreinigungen durch Lebensmittelmasse, Abrieb oder Ähnliches insbesondere auch nach einem Sortenwechsel möglichst vermieden werden und eine Reinigung der Walzenreibmaschine schnell durchgeführt werden kann, wird vorgeschlagen, dass eine Abdichtung des Produktbereichs (9, 109) zu einem jeweiligen Lagerbereich (7) an einer radial ausgerichteten Stirnfläche (21) der jeweiligen Walze (2, 102) angeordnet ist und ein radiales Außenmaß (R_{D}) von der Walzenachse (4) ausgemessen, von mindestens 80 %, vorzugsweise mindestens 90 %, eines Radius (R_{W}) der Walze (2, 102) in dem Abschnitt, in dem sich der Walzenspalt (20) befindet, aufweist.

## Beschreibung

### Einleitung

Die Erfindung betrifft eine Walzenreibmaschine zum Vermahlen einer teigig-pastösen Lebensmittelmasse mit mehreren parallel zueinander ausgerichteten, hinter- und/oder übereinander in einem Maschinengestell angeordneten Walzen, die mit Hilfe mindestens einer Antriebseinrichtung um eine Walzenachse drehantreibbar sind, so dass die zu vermahlende Lebensmittelmasse in Form eines zusammenhängenden Produktfilms durch zumindest einen zwischen zwei benachbarten Walzen befindlichen Walzenspalt förderbar ist, wodurch ein Vermahlen der Lebensmittelmasse erfolgt, wobei die Walzenreibmaschine einen Produktbereich aufweist, in dem die zu vermahlende Lebensmittelmasse mit Oberflächen sowohl mindestens einer der Walzen als auch von Begrenzungswänden in Kontakt kommt, wobei jede Walze an gegenüberliegenden Enden jeweils einen Lagerabschnitt aufweist, mit dem sich die Walze jeweils in einen Lagerbereich der Walzenreibmaschine, insbesondere deren Maschinengestells, hinein erstreckt, wobei die Lagerbereiche von dem Produktbereich abgetrennt sind und jeweils zwei Durchführungen jeder Walze von dem Produktbereich in die der jeweiligen Walze zugeordneten Lagerbereiche gegen einen Durchtritt der zu vermahlenden Lebensmittelmasse abgedichtet sind.

### Stand der Technik

Ein erster Schritt im Herstellungsprozess von Schokolade beschäftigt sich mit der Vermahlung der teigigen - pastösen Lebensmittelmasse. Mittels dieses Vorgangs werden feste Bestandteile der Lebensmittelmasse (hier: Kakaomasse, Zucker, Kakaobutter, Emulgator, Milchpulver und diverse andere Komponenten) dermaßen zerkleinert, dass ein körniges Gefühl während des Verzehrs der Schokolade möglichst verhindert werden soll. Für diesen Vermahlungsprozess werden die eingangs genannten Walzwerke bzw. Walzreibmaschinen (auch "Refiner" genannt) eingesetzt. Eine häufig anzutreffende Ausführungsform dieser Walzreibmaschinen verfügt über fünf Walzen, wobei alternativ auch Zweiwalz-, Dreiwalz- und Siebenwalzreibmaschinen zum Einsatz kommen.

Die zylindrischen oder fassförmigen Walzen sind horizontal angeordnet, wobei jeweils ein Walzenpaar einen Walzenspalt bildet. Die in Förderrichtung der Lebensmittelmasse aufeinander folgenden Walzenspalte werden von dem Walzenspalt, durch welchen die Lebensmittelmasse als erstes befördert und vermahlen wird, bis hin zum letzten Walzenspalt immer kleiner. Es sind sowohl Walzen mit festem Walzenspalt als auch mit veränderbaren Walzenspalt bekannt, wobei der veränderbare Walzenspalt von der Geschwindigkeit der Walze sowie dem Walzendruck abhängt. Folglich werden die festen Bestandteile innerhalb der Lebensmittelmasse von Walzenspalt zu Walzenspalt immer feiner vermahlen und die Körnigkeit reduziert. Die Drehzahl muss bei dem immer kleiner werdenden Walzenspalt (d.h. kleiner werdender Filmdicke) zunehmen, um bei konstanter Filmbreite einen konstanten Massenstrom zu gewährleisten und somit einen Rückstau der Lebensmittelmasse zu vermeiden.

Die Walzen der Walzenreibmaschine lassen sich im Sinne dieser Anmeldung in einen Lagerabschnitt und einen Produktabschnitt aufteilen. Der Produktabschnitt ist typischerweise zylindrisch oder leicht bauchig (ballig) ausgestalten. Das heißt, dass der Durchmesser in der Mitte der Längsachse des Zylinders größer ist als in den Randbereichen. Dies ermöglicht einen weitestgehend konstanten Liniendruck von den Walzen auf die zu verarbeitende Masse. An den jeweiligen Enden des Produktabschnitts folgt nach einer Abstufung hin zu einem reduzierten Durchmesser der Lagerabschnitt.

Analog lässt sich im Sinne dieser Anmeldung das Gehäuse der Walzenreibmaschine in einen Produktbereich und einen Lagerbereich aufteilen, wobei diese beiden durch eine Begrenzungswand voneinander getrennt sind. In der Begrenzungswand befindet sich eine Bohrung durch die der Lagerabschnitt der Walze geführt wird ("Durchführung").

Die Walzen sind drehbar um die Walzenachse gelagert, wobei die Walzenachse von der Längsachse der zylindrischen Walze gebildet wird und horizontal angeordnet ist. Wie beispielsweise aus der DE 10 2005 022 378 B4 ersichtlich wird, besteht die Abdichtung lediglich in einer zylindrischen Kontaktfläche zwischen der Lagerbohrung und dem Lagerabschnitt der Walze. Um zu verhindern, dass Lebensmittelmasse durch diese Lagerbohrung von dem Produktbereich in den Lagerbereich gelangt, wird der Lagerabschnitt der Walze von einem Dichtungsring aus Filzmaterial umschlossen. Nachteilig an diesen filzartigen Dichtungen ist, dass einerseits eine hinreichende Dichtigkeit auf Dauer nicht gewährleistet werden kann und andererseits Filzpartikel in die Lebensmittelmasse gelangen können.

Ein weiterer Nachteil besteht darin, dass sich zwischen der Walze und der Begrenzungswand des Gehäuses ein vertikaler (Ring-)Spalt befindet, in dem sich Lebensmittelmasse ansammeln kann. Dieser Spalt lässt sich nur sehr mühsam reinigen. Während eines Wechsels von einer Sorte oder Rezeptur der Lebensmittelmasse zu einer anderen muss die Walzenreibmaschine jedoch gereinigt werden. Es ist allerdings sehr schwierig und zeitaufwendig die Reste der Lebensmittelmasse aus dem Spalt vollständig zu entfernen. Dazu müssten alle Walzen vollständig demontiert werden, da es ansonsten nicht möglich ist, diesen Spaltbereich gründlich zu reinigen. Diese aufwendige Reinigung führt zu einer längeren Unterbrechung des Produktionsprozesses. Die Entfernung der Reste der Lebensmittelmasse ist nicht nur aus hygienischen Gründen, sondern auch aus optischen Gründen zwingend, wenn z.B. bei einem Wechsel von einer dunklen Lebensmittelmasse auf eine helle Lebensmittelmasse Verfärbungen der hellen Lebensmittelmasse durch austretende Reste der dunklen Lebensmittelmasse, aus dem Spaltbereich auftreten würden. Tritt eine sichtbare Verfärbung auf, müsste die Lebensmittelmasse entsorgt werden, was zu einem finanziellen Schaden führt. Weiterhin ist eine gründliche Reinigung deswegen erforderlich weil herkömmliche Lebensmittelmasse beispielsweise nicht mit Lebensmittelmasse für Diabetikerprodukte vermischt werden darf. Auch Erdnüsse oder nusshaltige Produkte sollten möglichst vollständig beseitigbar sein, da diese gegebenenfalls Allergien auslösen können.

### Aufgabe

Der vorliegenden Erfindung liegt nunmehr die Aufgabe zugrunde, eine Walzenreibmaschine derart zu konstruieren, dass Verunreinigungen durch Lebensmittelmasse, Abrieb oder Ähnliches insbesondere auch nach einem Sortenwechsel möglichst vermieden werden und eine Reinigung der Walzenreibmaschine schnell durchgeführt werden kann.

### Lösung

Ausgehend von einer Vorrichtung der eingangs beschriebenen Art wird die zugrunde liegende Aufgabe dadurch gelöst, dass eine Abdichtung des Produktbereichs zu einem jeweiligen Lagerbereich an einer radial ausgerichteten Stirnfläche der jeweiligen Walze angeordnet ist und ein radiales Außenmaß, von der Walzenachse aus gemessen, von mindestens 80 %, vorzugsweise mindestens 90 %, eines Radius der Walze in dem Abschnitt, in dem sich der mahlende Walzenspalt befindet, aufweist

Anders als aus dem Stand der Technik bekannt, findet die Abdichtung zwischen dem Lagerbereich und dem Produktbereich der Walzenreibmaschine nicht innerhalb des Lagerabschnitts der jeweiligen Walze, das heißt, einer zylindrischen Mantelfläche, sondern an jeweils einer vertikalen Stirnfläche der jeweiligen Walze statt. Diese Anordnung weist den Vorteil auf, dass kein Spalt zwischen dem Gehäuse der Walzenreibmaschine und der Stirnfläche der Walze gebildet wird. Falls dennoch eine Abstufung der Walze in dem Produktbereich vorhanden sein sollte, wird diese möglichst gering gehalten, indem das radiale Außenmaß der Abdichtung von der Walzenachse aus gemessen mindestens 80 %, vorzugsweise 90 %, des Radius der Walze in der Mitte ihrer Längsachse beträgt.

Mit einer Abstufung wird im Sinne dieser Anmeldung ein freier Raum im Produktabschnitt der Walze bezeichnet, der sich durch unterschiedliche Außendurchmesser der Walze ergeben kann. So ist es beispielsweise möglich, dass die Walze an zwei sich gegenüberliegenden Enden des Produktabschnitts über eine vergleichsweise kurze Länge einen geringeren Durchmesser aufweist als in der Mitte. Der Durchmesser ändert sich typischerweise stufenförmig. Der reduzierte Durchmesser im Lagerabschnitt wird hierbei außer Acht gelassen.

Ein Nutzen des erfindungsgemäß nicht vorhandenen Spalts besteht darin, dass die Reinigung der Walzenreibmaschine erheblich verbessert wird. Es ist vollkommen ausreichend, den Walzenspalt zwischen den jeweiligen Walzenpaaren zu vergrößern und anschließend zu reinigen. Dies hat zur Folge, dass alle Reste der Lebensmittelmasse während des Reinigungsprozesses entfernt werden können. Die aus dem Stand der Technik bekannten Walzenreibmaschinen werden nicht vollständig gereinigt, wodurch ein Risiko mittels Verunreinigungen eingegangen wird. Für eine vollständige Reinigung der aus dem Stand der Technik bekannten Lebensmittelmassen müssten alle Walzen aus der Walzenreibmaschine entfernt werden.

Ein weiterer Vorteil dieser Bauart besteht darin, dass auf die filzartigen Dichtungen verzichtet werden kann. Dadurch können die Reinheitsbestimmungen während der Vermahlung der Lebensmittelmasse besser eingehalten werden. Dies ist insbesondere deswegen wünschenswert, da die Reinheitsanforderungen in der Lebensmittelindustrie immer strenger werden.

Zur vollständigen Vermeidung des Spaltes und/oder einer Abstufung ist in einer besonders vorteilhaften Ausgestaltung der Erfindung vorgesehen, dass die Abdichtung des Produktbereiches an eine Mantelfläche der Walze im Bereich des Walzenspalts angrenzt. Das heißt, dass die Abdichtung ein Außenmaß aufweist, das dem Durchmesser der Stirnfläche der Walze entspricht. Mithilfe dieser Anordnung wird ein Anlagern der Lebensmittelmasse in dem verbleibenden minimal breiten "Restspalt" vollständig verhindert.

Die Abdichtung ist derart ausgestaltet, dass möglichst kein Spalt mehr zwischen der Begrenzungswand und der Walze vorhanden ist. Um eine möglichst reibungsarme Drehbarkeit der Walzen zu gewährleisten, ist erfindungsgemäß vorgesehen, dass eine Abdichtung von zwei radial ausgerichteten, relativ zueinander gleitenden Dichtflächen gebildet ist. Die erste Dichtfläche ist an der radial ausgerichteten Stirnfläche der Walze und die zweite Dichtfläche ist an einem radial ausgerichteten Abschnitt der Begrenzungswand des Produktbereichs angeordnet. Daraus folgt, dass die erste Dichtfläche zusammen mit der Walze rotiert und die zweite Dichtfläche still steht. Die Begrenzungswand trennt den Produktbereich und den Lagerbereich zumindest in dem Abschnitt, in dem sich die Walzen befinden, wobei diese einer Walze zugeordneten Abschnitte der Begrenzungswand sowohl rund als auch eckig ausgestaltet sein können oder eine beliebige andere als geeignet erscheinende Form aufweisen können.

Ferner ist vorgesehen, dass eine Nutzbreite, das heißt, die Breite des Walzenspalts einer von zwei benachbarten Walzen gebildeten Walzenpaarung, einer Breite des Produktbereichs an der Stelle des dem Walzenpaar zugeordneten Walzenspalts entspricht. Typischerweise ist die Walze in einem Nutzbereich bauchig ausgestalten. Die Nutzbreite der Walze entspricht vorzugsweise der Breite des Produktbereichs, damit die gesamte Breite der Walze zum Vermahlen der teigig-pastösen Lebensmittelmasse eingesetzt werden kann. Aus fertigungstechnischer Hinsicht ist die Nutzbreite allerdings häufig kleiner als der gesamte Produktbereich. Das ist damit zu begründen, dass die Walzen normalerweise rohrförmig sind. An den jeweiligen Enden des ,Rohrkörpers' wird ein ,Stopfen' eingesetzt. Der Außendurchmesser des Stopfens entspricht dem Innendruchmesser des Walzenrohres. Folglich weist die zusammengesetzte Walze eine kleine Abstufung auf. Die Nutzbreite ist nunmehr kleiner als die Breite des Produktbereichs da ein Mahlen im Bereich der Stopfen aufgrund des extrem großen "Spalts" dort unmöglich ist. Der geringere Durchmesser ist bei der Reinigung der Walzenreibmaschine nicht hinderlich, da die Abstufung nur gering und leicht zugänglich ist.

Die Abdichtung zwischen der Walze und der Begrenzungswand schließt auch in diesem Fall stirnseitig mit der Walze ab, allerdings entspricht das radiale Außenmaß der Abdichtung nicht mehr dem Außendurchmesser der Walze in der Mitte ihrer Längsachse, sondern dem Außendurchmesser des ,Stopfens'.

In einer vorteilhaften Ausgestaltung der Erfindung ist vorgesehen, dass die Walze an gegenüber liegenden Seiten jeweils mit einer koaxial zu der Walze ausgerichteten Gleitscheibe versehen ist, an der eine der Dichtflächen angeordnet ist und die vorzugsweise drehfest mit der übrigen Walze, vorzugsweise formschlüssig, verbunden ist. Die Gleitscheibe mit der daran angeordneten Dichtfläche bildet die sich drehende Dichtfläche. Das hat zur Folge, dass die Gleitscheibe drehfest mit der Walze verbunden sein sollte, um die Relativbewegung zwischen Gleitscheibe und der Dichtfläche an der Begrenzungswand sicher zu stellen. Hinzu kommt, dass durch die drehfeste Verbindung ein unnötiger Abrieb und Verschleiß der Walze, der Gleitscheibe und/oder der Begrenzungswand verhindert wird. Im Sinne der vorliegenden Anmeldung ist die Gleitscheibe ein Bestandteil der Walze.

Ferner ist dabei vorgesehen, dass die Gleitscheibe vorzugsweise eine in axiale Richtung gemessene Dicke zwischen 2 mm und 5 mm besitzt. Sowohl die Gleitscheibe als auch die Walze sind vorzugsweise metallisch, wodurch eine Verbindung dieser beiden einfach möglich ist. Aufgrund der Lebensmittelverarbeitung ist es besonders vorteilhaft, wenn die Gleitscheibe aus Edelstahl besteht, da auf diese Weise kein rostiger Abrieb in die Lebensmittelmasse gelangen kann und eine Zerstörung der Gleitscheibe möglichst vermieden wird. Die Gleitscheibe kann an die jeweiligen sich gegenüberliegenden Enden der Walze angebracht werden, und bildet so die der Begrenzungswand zugewandte Stirnfläche der Walze. Die Gleitscheibe lässt somit keinen Spalt entstehen, sodass sich keine Reste der Lebensmittelmasse darin absetzen können.

Die Erfindung weiter ausgestaltend ist vorgesehen, dass die Begrenzungswand des Produktbereichs eine Bohrung zum Durchtritt eines in den Lagerabschnitt führenden Wellenzapfens aufweist, wobei ein die Bohrung umschließender, radial ausgerichteter umlaufender Randstreifen der Begrenzungswand eine Dichtfläche bildet. Die Bohrung dient zur Durchführung des Lagerabschnitts der Walze von dem Produktbereich in den Lagerbereich, wobei der Lagerabschnitt der Walze in dem Lagerbereich der Maschine in einem dafür vorgesehenem Lager (meist ein Rollenlager) gelagert wird. Der Durchmesser der Bohrung entspricht vorzugsweise dem Innenmaß des Abschnitts der Begrenzungswand, wodurch dieser Abschnitt den umlaufenden Randstreifen um die Bohrung bildet. Die Stirnseite der Walze ist so angeordnet, dass diese mit dem Randstreifen der Begrenzungswand in Kontakt steht. Die feststehende Dichtfläche wird somit von dem Randstreifen gebildet.

Gemäß einer vorteilhaften Ausgestaltung der Erfindung ist vorgesehen, dass ein Abschnitt der Begrenzungswand zumindest im Bereich der von dieser gebildeten Dichtfläche aus einem reibungsarmen und verschleißarmen Kunststoffmaterial, vorzugsweise aus PTFE oder PTFE Compound gebildet ist, wobei das Kunststoffmaterial vorzugsweise temperaturbeständig ist. Die Materialauswahl ist insbesondere im Produktraum äußerst relevant, da neben der Gewährleistung einer guten Abdichtung auch eine möglichst reibungsarme Drehung der Walze ermöglicht werden soll. Mittels eines verschleißarmen, lebensmittelechten Kunststoffes sind diese Voraussetzungen geben. Obendrein entsteht kein nennenswerter Abrieb, der in die Lebensmittelmasse gelangen könnte. Die Reinigung des Kunststoffmaterials lässt sich auf eine einfache Art und Weise gestalten, die den Reinigungsvorschriften der Lebensmittelindustrie entspricht

Damit eine leichte Verschiebung der Walzen in eine Richtung senkrecht zu der Walzenachse ermöglicht werden kann, ist alternativ vorgesehen, dass die Begrenzungswand insgesamt aus einem reibungsarmen und verschleißarmen Kunststoffmaterial, insbesondere PTFE oder PTFE Compound ausgebildet ist, wobei das Kunststoffmaterial vorzugsweise temperaturbeständig ist. Während der Reinigung des Produktbereichs und des Betriebs der Walzenreibmaschine sind kleine Verschiebungen der Walzen in radialer Richtung zueinander erforderlich. Nichtsdestotrotz kann aufgrund der vollständig aus verschleißarmen Kunststoffmaterial bestehenden Begrenzungswand eine ausreichende reibungsarme Abdichtung gewährleistet werden. Die Herstellung einer einteiligen Begrenzungswand ist darüber hinaus fertigungstechnisch günstig.

Die Erfindung weiter ausgestaltend ist vorgesehen, dass ein die Dichtfläche der Begrenzungswand bildendes, vorzugsweise eine zu einer Walzenachse koaxiale Bohrung aufweisendes Bauteil in axiale Richtung gegen die zugeordnete Dichtfläche an der radial ausgerichteten Stirnwand der Walze andrückbar ist. Das Andrücken erfolgt vorzugsweise mittels eines Dichtungsringes, vorzugsweise bestehend aus Weichkunststoff, weiter vorzugsweise aus Silikon, und/oder mittels eines unter Druck stehenden Fluids, insbesondere Luft. Das Bauteil soll mittels des Dichtungsringes und/oder unter Druck stehenden Fluids gegen die Stirnfläche der jeweiligen Walze gedrückt werden um eine wirksame Abdichtung zwischen der Begrenzungswand und der Stirnfläche der Walze zu erreichen. Weiterhin wird das Fluid vorzugsweise zur Reinigung des Gleitspalts und/oder zur Kühlung verwendet.

In einer weiteren Ausgestaltung der Erfindung ist vorgesehen, dass ein einer Walze zugeordneter Abschnitt einer Begrenzungswand insgesamt in Richtung auf die eine Dichtfläche bildende radial ausgerichtete Stirnfläche der Walze andrückbar ist, wobei vorzugsweise mehrere Abschnitte einer Begrenzungswand im Bereich des jeweiligen Walzenspalts unmittelbar aneinander angrenzen und vorzugsweise gegeneinander abgedichtet sind. Das heißt, dass das Bauteil, welches mit dem unter Druck stehenden Fluid an die Stirnfläche der Walze gedrückt wird, von einem Abschnitt der Begrenzungswand oder der Begrenzungswand selbst gebildet wird. Die jeweiligen Abschnitte grenzen aneinander und lassen vorzugsweise eine gewisse Flexibilität zwecks einer abschnittsweisen Verlagerbarkeit zu, damit die Walzen während der Verschiebung durch einen ungleichmäßigen Hub nicht verkanten, wodurch anderenfalls Beschädigungen auftreten würden. Ein gegebenenfalls vorhandener Spalt zwischen den Abschnitten wird dermaßen abgedichtet, dass keine Lebensmittelmasse durch diesen Spalt hindurch gelangen kann. Eine besonders vorteilhafte Ausgestaltung der Erfindung besteht in einer mit dem Fluid beaufschlagbaren Druckkammer, die in axiale Richtung einerseits von einer der Walze abgewandten Innenseite der Begrenzungswand und andererseits von einer Stirnfläche eines mit dem Maschinengestell verbundenen Dichtungsgehäuses und in radiale Richtung nach innen von dem sich von der Begrenzungswand zu dem Dichtungsgehäuse erstreckenden Dichtungsring begrenzt wird. Der Dichtungsring ist vorzugsweise durch einen Anschlag an dem Dichtungsgehäuse gegen axiale Verschiebung in Richtung auf den Produktbereich zu gesichert. Um dennoch die Montage des Dichtungsringes möglichst einfach zu gestalten und den Anschlag des Dichtungsgehäuses zu überwinden, ist der Dichtungsring vorzugsweise in seiner Umfangsrichtung geteilt. Folglich braucht der Dichtungsring in geöffnetem Zustand nur hinter den Anschlag gelegt und anschließend wieder verschlossen werden. Um auch die dem Dichtungsring gegenüberliegende Seite der Druckkammer druckdicht zu verschließen, kann sich dort eine Trennwand befinden. Das Fluid wird vorzugsweise über das Dichtungsgehäuse in die Druckkammer eingeleitet und verursacht ein Andrücken der Begrenzungswand an die Stirnfläche der Walze.

Die gegenüberliegende Seite des Dichtungsringes muss nicht notwendigerweise von einer Trennwand in radialer Richtung nach außen hin abgedichtet werden. Vielmehr ist es in konstruktiver Hinsicht von Vorteil, wenn eine Druckkammer zur Beaufschlagung mindestens zweier jeweils die Dichtfläche einer Begrenzungswand bildender Bauteile, wobei die Dichtflächen benachbarten Walzen zugeordnet sind, oder zur Beaufschlagung mindestens zweier benachbarter Begrenzungswände insgesamt vorgesehen ist. Dabei ist vorgesehen, dass vorzugsweise die Druckkammer im Bereich jeder Bohrung der Abschnitte der Begrenzungswand von jeweils einem Dichtungsring begrenzt ist. Das heißt, dass die Druckkammer gebildet wird von dem Dichtungsgehäuse, von der der Walze abgewandten Seite der Begrenzungswand und von zwei Dichtungsringen, welche jeweils einem anderen Dichtungsgehäuse zugeordnet sind. Um dies zu ermöglichen müssen Kontaktflächen zwischen den Begrenzungswänden und den Dichtungsgehäusen des jeweiligen Walzenpaares abgedichtet werden, damit genügend Druck aufgebaut werden kann. Diese Art des Aufbaus weist den Vorteil auf, dass nur ein Zufuhranschluss für das unter Druck stehende Fluid in die Druckkammer vorgesehen werden muss.

Erfindungsgemäß ist vorgesehen, dass während des Betriebs der Walzenreibmaschine das Fluid, vorzugsweise Gas, aus der Druckkammer durch den abzudichtenden Spalt in den Produktbereich und/oder die Umgebung leitbar ist. Ein entweichendes Fluid wird von einer unter Druck stehenden Fluidzufuhr nachgeführt. Die geringe Menge des Fluides entweicht durch einen minimalen Spalt zwischen den relativ zueinander bewegten Dichtflächen an der Walze einerseits und der Begrenzungswand andererseits, um möglicherweise in diesen Spalt gelangte Lebensmittelmasse fortlaufend wieder hinaus zu transportieren. Auf diese Weise wird zusätzlich verhindert, dass die Lebensmittelmasse mit alten Resten einer anderen Lebensmittelmasse, die in den Restspalt eingedrungen ist, verunreinigt wird.

Vorteilhafterweise ist vorgesehen, dass an dem Dichtungsgehäuse ein weiterer Dichtungsring angeordnet ist, der die Druckkammer in eine Richtung von dem Produktbereich weg begrenzt. Dieser weitere Dichtungsring ist vorzugsweise an dem Dichtungsgehäuse angeordnet und befindet sich zwischen dem Dichtungsgehäuse und dem Dichtungsring, welcher eine radiale Abdichtung der Druckkammer ermöglicht.

Gemäß einer vorteilhaften Ausgestaltung der Erfindung ist vorgesehen, dass das Dichtungsgehäuse radial innerhalb der an der Begrenzungswand angeordneten Dichtfläche eine umlaufende Dichtfläche aufweist, die in gleitendem Kontakt mit der radial ausgerichteten Stirnfläche der Walze oder der Gleitscheibe steht. Diese Dichtfläche soll bewirken, dass das Fluid durch die Abdichtung entgegen der Abdichtungsrichtung in den Produktbereich gelangt, und auf diese Weise eventuelle Lebensmittelmasse aus dem Bereich zwischen den Dichtflächen heraus und zurück in den Produktbereich befördert wird. Vorzugsweise ist diese Dichtfläche an dem Anschlag gemäß Anspruch 12 angeordnet.

Die Erfindung weiter ausgestaltend ist vorgesehen, dass mindestens zwei Walzen relativ zueinander in radiale Richtung unter Veränderung der Größe des Walzenspaltes bewegbar sind, wobei die Begrenzungswand oder die Abschnitte der Begrenzungswand relativ zu den Walzen feststeht beziehungsweise feststehen. Die kleinen Verschiebungen der Walzen relativ zueinander sind vor allem zu Beginn eines jeden Zerkleinerungsprozesses erforderlich, da der Walzenspalt anfangs größer ist als nach Erreichen des bereits weiter vorgeschrittenen, stationären Zustands des Zerkleinerungsprozesses. Dies ist damit zu begründen, dass zunächst größere Kräfte aufgebracht werden müssen, bevor ein zusammenhängender Produktfilm der Lebensmittelmasse durch die Walzen spalte geführt wird. Darüber hinaus werden die Walzenspalte auch bei einer Reinigung der Maschine, z.B. zwecks Produktwechsels, vergrößert.

Um die Bewegung der Walzen in radialer Richtung relativ zueinander zu ermöglichen, ist schließlich vorgesehen, dass sich innerhalb jedes Dichtungsgehäuses eine Lagerschwinge mit einem Lager für einen Wellenzapfen der Walze befindet. Eine Verschwenkung der Lagerschwinge relativ zu dem Maschinengestell um eine von der Walzenachse beabstandete Schwenkachse bewirkt eine Relativbewegung zwischen der zugeordneten Walze und dem Maschinengestell und/oder dem vorzugsweise damit verbundenen Dichtungsgehäuse. Die Lagerschwinge ist im Lagerbereich parallel zu der Längsachse der Walze angeordnet. Typischerweise stehen die Lagerschwingen der einzelnen Walzen - vorzugsweise über Koppelstangen - miteinander in Verbindung, sodass die Änderung der Position einer Walze mit der Änderung der anderen Walzen einhergeht, was den Einsatz nur eines einzigen Antriebs erforderlich macht.

### Ausführungsbeispiele

Die vorstehend beschriebene Erfindung wird nachfolgend anhand von zwei Ausführungsbeispielen, die in den Figuren dargestellt werden, näher erläutert.

Es zeigt:
- Fig. 1:: eine Ansicht einer erfindungsgemäßen Walzenreibmaschine in einer ersten Ausführungsform,
- Fig. 2:: eine vergrößerte Darstellung eines Abschnittes zweier Walzen sowie ein angrenzendes Dichtungsgehäuse gemäß Figur 1,
- Fig. 3:: eine Seitenansicht des Abschnitts zweier Walzen gemäß Figur 2,
- Fig. 4:: eine vergrößerte Darstellung einer Abdichtung zwischen Produkt- und Lagerbereich der Walzenreibmaschine gemäß Figur 1,
- Fig. 5:: eine vergrößerte Darstellung eines Ausschnittes zweier Walzen in einem Dichtungsgehäuse einer erfindungsgemäßen Walzenreibmaschine in einer zweiten Ausführungsform,
- Fig. 6:: eine einer Walze zugewandte Ansicht einer Begrenzungswand einer erfindungsgemäßen Walzenreibmaschine in einer dritten Ausführungsform,
- Fig. 6a:: ein Vertikalschnitt der Begrenzungswand und die daran angrenzenden Dichtungsring gemäß Figur 6, und
- Fig. 7:: eine Ansicht einer Walze, der Begrenzungswand sowie den Dichtungsringen gemäß Figur 6.

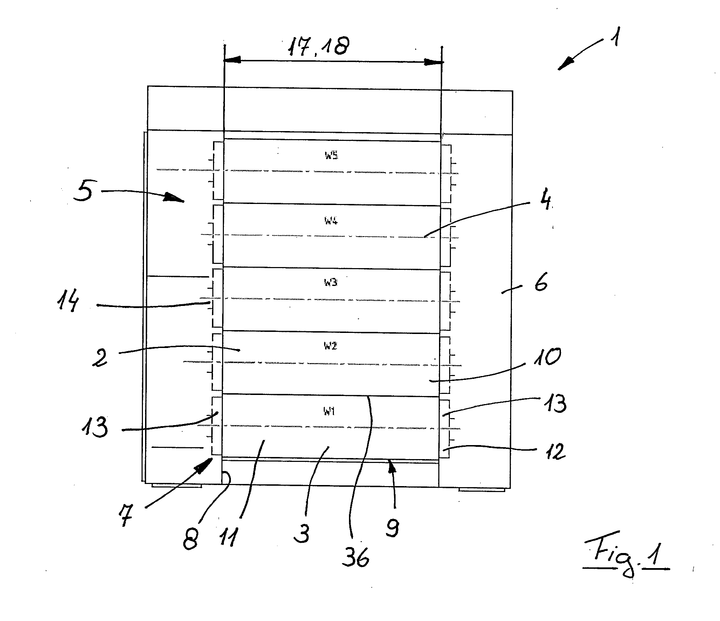

Die Figur 1 zeigt eine erfindungsgemäße Walzenreibmaschine **1** mit fünf Walzen **2.** Die Walzen **2** weisen in ihrem Mittelteil **3** eine im Wesentlichen zylindrische Form auf, wobei die jeweiligen Walzenachsen **4** parallel zueinander und horizontal in einem Maschinengestell **5** angeordnet sind. An dem Maschinengestell **5** sind Gehäusewände **6** befestigt, die unter anderem Lagerbereiche **7** der Walzenreibmaschine **1** verdecken. Weiterhin trennen Begrenzungswände **8** die Lagerbereiche **7** von einem Produktbereich **9,** in dem eine teigigpastöse Lebensmittelmasse während eines Herstellungsprozesses schlangenlinienförmig entlang der Mantelflächen **10** der Walzen **2** gefördert wird.

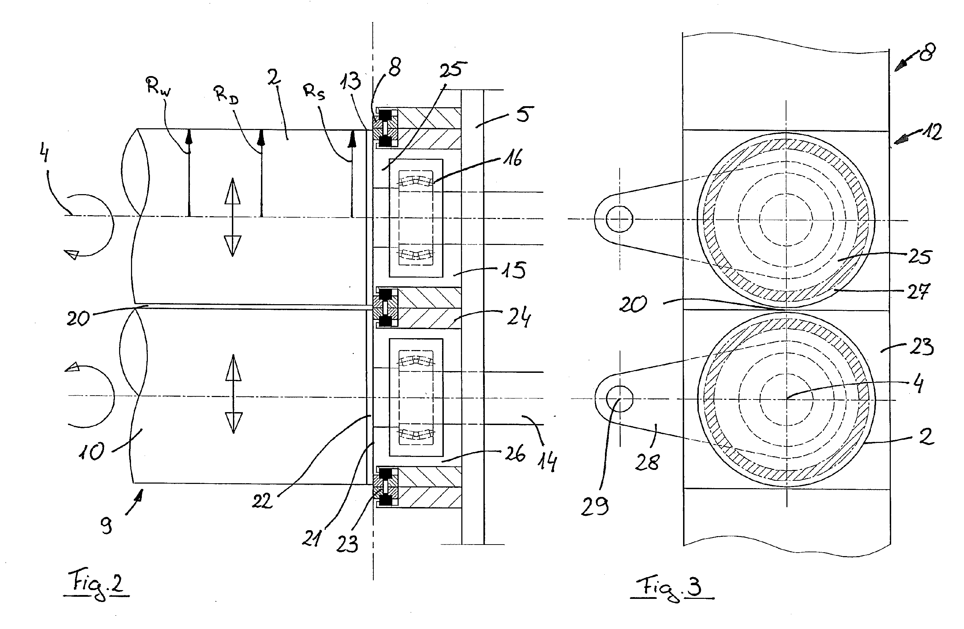

Die Walzen **2** sind in einen Produktabschnitt **11** und einen Lagerabschnitt **12** unterteilt. Die Lagerabschnitte **12** werden von jeweils zwei sich gegenüberliegenden Endabschnitten **13** einer Walze **2** gebildet und weisen jeweils einen Wellenzapfen **14** auf. Die Wellenzapfen **14** werden gemäß Figur 2 durch eine Durchführung **15** gemäß Figur 2 von dem Produktbereich **9** in die Lagerbereiche **7** geführt und sind dort jeweils in einem Lager **16** gemäß Figur 2 gelagert. Die Walzen **2** können mittels einer nicht dargestellten Antriebseinrichtung um die jeweilige Walzenachse **4** gedreht werden.

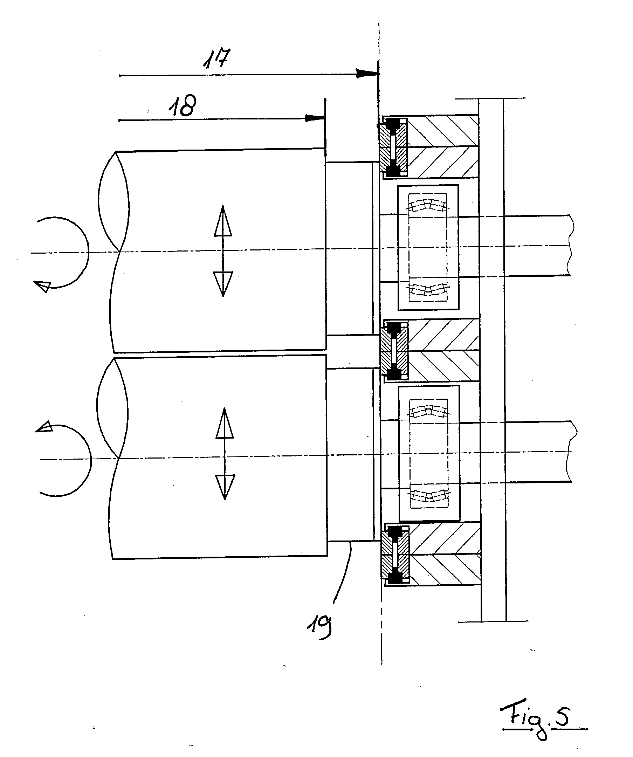

In diesem Ausführungsbeispiel entsprechen eine Breite **17** des Produktbereichs **9** der Walzenreibmaschine **1** sowie des Produktabschnitts **11** der Walze **2** einer Nutzbreite **18.** Die Breite **17** des Produktabschnitts **9** kann sich insofern von der Nutzbreite **18** unterscheiden, als dass die Nutzbreite **18** die Breite der Walze **2** wiedergibt, in welcher die Lebensmittelmasse tatsächlich vermahlen wird, wobei diese Breite nicht der gesamten Breite **17** des Produktabschnitts entsprechen muss. Im Gegensatz dazu können die Walzen **2** an zwei sich gegenüberliegenden Enden des Produktabschnitts **11** kleine Abstufungen **19** gemäß Figur 5 aufweisen. In diese Abstufungen **19,** die durch den Herstellungsprozess der Walzen **2** bedingt sind, kann zwar Lebensmittelmasse gelangen, allerdings wird letztere dort nicht vermahlen und meist auch nicht aktiv hindurchgefördert.

Die Figur 2 zeigt einen vergrößerten Ausschnitt zweier in Figur 1 dargestellter Walzen **2.** Zwischen den von diesen zwei Walzen **2** gebildeten Walzenpaar befindet sich ein Walzenspalt **20,** durch den ein zusammenhängender Produktfilm der Lebensmittelmasse hindurch geführt wird. Ein erster Spalt **36** gemäß Figur 1, durch welchen die Lebensmittelmasse geführt wird, entsteht durch die Lebensmittelmasse. Ohne die Lebensmittelmasse berühren sich die beiden benachbarten Walzen. Damit die Lebensmittelmasse nicht von dem Produktbereich **9** in die Lagerbereiche **7** gelangen kann, ist eine Abdichtung zwischen diesen Bereichen **7, 9** an einer radial ausgerichteten Stirnfläche **21** der Walze **2** vorhanden. Ein radiales Außenmaß **R**_{D} der Abdichtung entspricht einem Radius **R**_{S} der Stirnfläche **21** der Walze **2.** Das heißt, die Abdichtung des Produktbereichs **9** beginnt - radial von außen betrachtet - vorzugsweise an den Mantelflächen **10** der zylinderförmigen Walze **2.**

Jede Walze **2** ist an den zwei sich gegenüberliegenden Stirnflächen **21** drehfest mit jeweils einer zu der Walze **2** gehörenden Gleitscheibe **22** verbunden (vorzugsweise verschraubt), sodass sich die Gleitscheiben **22** mitsamt der jeweiligen Walze **2** drehen. Eine der Walze **2** abgewandte Seite jeder Gleitscheibe **22** bildet in diesem Ausführungsbeispiel eine erste Dichtfläche **D_{W}** der Abdichtung. Die Abdichtung weist eine mit der Dichtfläche **D_{w}** korrespondierende weitere Dichtfläche **D**_{B} auf, welche von einem parallel zu der Gleitscheibe **22** ausgerichteten Abschnitt **23** der Begrenzungswand **8** gebildet wird, wobei jeder Gleitscheibe **22** ein einzelner Abschnitt **23** der Begrenzungswand **8** zugeordnet wird. Die Begrenzungswand **8** ist an einem mit dem Maschinengestell **5** verbundenen Dichtungsgehäuse **24** angeordnet. An jedem der zwei sich gegenüberliegenden Endabschnitte **13** der jeweiligen Walze **2** befindet sich ein Dichtungsgehäuse **24.** In einer hier nicht dargestellten Ausführungsform kann auch eine durchgehende Begrenzungswand vorgesehen sein, die sich über alle oder zumindest mehrere Walzen erstreckt.

In einer weiteren hier nicht dargestellten Ausführungsform kann auf eine Gleitscheibe verzichtet werden. Die Dichtfläche wird in diesem Fall von der Stirnfläche der Walze gebildet, weshalb diese zumindest dort aus einem korrosionsbeständigen Material oder Stahl bestehen muss.

Die der Gleitscheibe **22** zugeordnete Dichtfläche **D**_{w} dreht sich während einer Drehung der Walzen **2** mit, wohingegen die von dem Abschnitt **23** der Begrenzungswand **8** gebildete Dichtfläche **D**_{B} fest steht. Damit zwischen den beiden Dichtflächen **D**_{w}, **D**_{B} eine ungehinderte Drehung stattfinden kann, müssen die beiden Dichtflächen **D**_{w}, **D**_{B} möglichst reibungsarm und verschleißfest ausgestalten sein. Diese reibungsarme Gleitpaarung wird beispielsweise dadurch ermöglicht, dass die Gleitscheibe **22** aus Edelstahl und mindestens der Abschnitt **23** der Begrenzungswand **8** aus einem Kunststoffmaterial, zum Beispiel PTFE, gefertigt ist.

Die Wellenzapfen **14** der Walzen **2** werden durch die jeweiligen Durchführungen **15** zwischen Produktbereich **9** und Lagerbereich **7** der Walzenreibmaschine **1** geführt. Die Durchführungen **15** werden jeweils von einer Bohrung **25** der Begrenzungswand **8** sowie einem Durchgang **26** in dem Dichtungsgehäuse **24** gebildet. Die Begrenzungswand **8** weist somit einen radial ausgerichteten Randstreifen **27** gemäß Figur 3 umlaufend um die Bohrung **25** auf. Dieser Randstreifen **27** bildet die mit der Gleitscheibe **22** korrespondierende feststehende Dichtfläche. Die Außenkontur der jeweiligen Abschnitte **23** der Begrenzungswand **8** ist jeweils ungefähr quadratisch beziehungsweise rechteckig, so dass sich aufgrund der Übereinander-Anordnung der Walzen **2** insgesamt eine lang gestreckte Rechteckform der Begrenzungswand **8** ergibt.

Die Figur 3 zeigt eine Seitenansicht des in Figur 2 dargestellten Lagerabschnittes **12.** Aus der Figur 3 wird ersichtlich, dass die Abschnitte **23** der Begrenzungswände **8** in diesem Ausführungsbeispiel rechteckig ausgestaltet sind und unmittelbar nebeneinander angeordnet sind. Horizontale Spalte zwischen den Abschnitten sind abgedichtet, um einen Durchtritt der Lebensmittelmasse von dem Produktbereich **9** in die Lagerbereiche **7** zu verhindern. Weiterhin sind in der Figur 3 zwei Lagerschwingen **28** dargestellt, mit denen die Walzen **2** relativ zueinander verschwenkt werden können, sodass der Walzenspalt **20** vergrößert wird. Die Lagerschwingen **28** drehen die Walzen **2** relativ zu dem Maschinengestell **5** jeweils um eine Schwenkachse **29,** wobei die Schwenkachse **29** parallel in einem Abstand zu der Walzenachse **4** angeordnet ist. Da die Dichtungsgehäuse **24** und - in radialer Richtung der Walzenachse **4 -** auch die Abschnitte **23** der Begrenzungswand **8** fest mit dem Maschinengestell **5** verbunden sind, sind die Lagerabschnitte **12** der Walzen **2** relativ dazu verlagerbar.

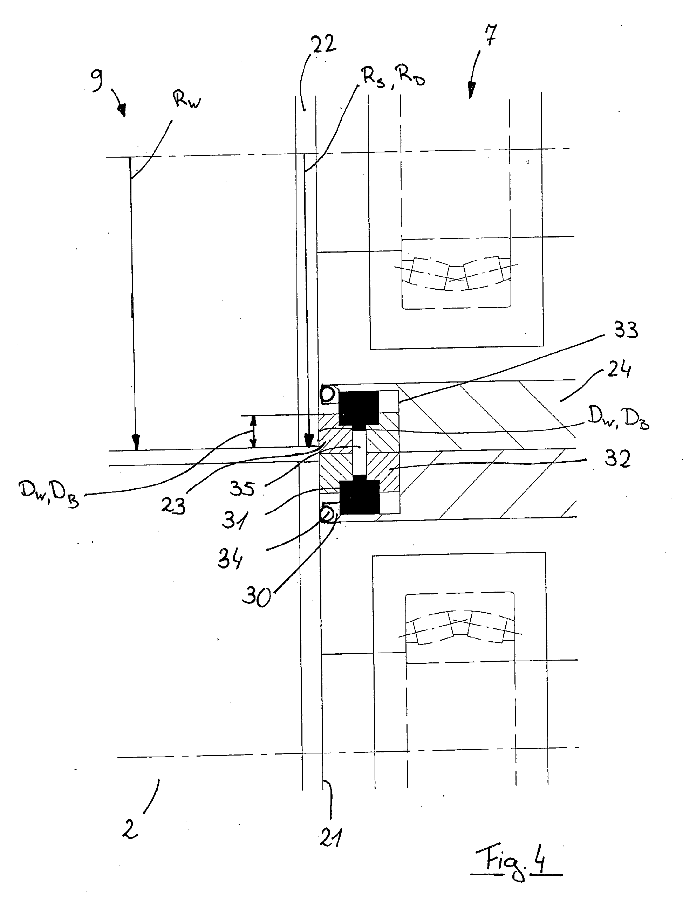

In der Figur 4 wird eine vergrößerte Darstellung der Abdichtung zwischen dem Produktbereich **9** und den jeweiligen Lagerbereichen **7** gezeigt. Das Dichtungsgehäuse **24** weist einen Anschlag **30** in Form eines umlaufenden Bundes auf, hinter den ein im Querschnitt T-förmiger Dichtungsring **31** gelegt wird. Damit der Dichtungsring **31** ohne Weiteres hinter den Anschlag **30** gelegt werden kann, ist der Dichtungsring **31** in Umfangsrichtung geteilt und kann in geöffnetem Zustand nach dem Einlegen in die von dem Bund begrenzte Nut wieder zusammen gesteckt, das heißt geschlossen, werden. Ein weiterer Dichtungsring **32** befindet sich zwischen dem Dichtungsring **31** und einer radial zu der Walze **2** ausgerichteten Wand **33** des Dichtungsgehäuses **24.**

An dem Dichtungsgehäuse **24** befindet sich eine zusätzliche Dichtung **34,** welche eine umlaufende Dichtfläche zwischen dem Dichtungsgehäuse **24** und der Gleitscheibe **22** bildet. Zwischen dieser Dichtung **34** und der Gleitscheibe **22** besteht ein gleitender Kontakt.

Um die Abdichtung weiter zu verbessern, ist eine Druckkammer **35** vorgesehen, die mit einem unter Druck stehenden Fluid beaufschlagbar ist, wodurch der Abschnitt **23** der Begrenzungswand **8** auf deren Rückseite das Fluid wirkt, gegen die Stirnfläche **21** drückt. Die Druckkammer **35** wird in diesem Ausführungsbeispiel von zwei benachbarten Abschnitten **23** der Begrenzungswand **8** sowie zwei an die Dichtungsgehäuse **24** angrenzenden Dichtungsringen **32** und zwei durch die Bunde festgelegten, im Querschnitt T-förmigen, Dichtungsringen **31** eines Walzenpaares begrenzt. In dem Dichtungsgehäuse **24** befindet sich ein hier nicht dargestellter Zufuhranschluss, damit das Fluid von einer hier nicht dargestellten Fluidquelle in die Druckkammer **35** geleitet werden kann.

In einem hier nicht dargestellten Ausführungsbeispiel wird die Druckkammer **35** von der Begrenzungswand **8,** den beiden im Querschnitt T-förmigen Dichtungsringen **31** und einer Trennwand, welche dem T-förmigen Dichtungsring gegenüberliegt, gebildet.

In einer weiteren hier nicht dargestellten Ausführungsform wird auf den weiteren Dichtungsring **31** verzichtet. Die axiale Abdichtung der Druckkammer an der von der Walze abgewandten Seite der Druckkammer erfolgt nunmehr durch eine Stirnfläche des Dichtungsgehäuses.

Die Figur 5 zeigt eine weitere Ausführungsform der erfindungsgemäßen Walzenreibmaschine **1,** wobei sich diese Ausführungsform in der Hinsicht von der in Figur 2 dargestellten Ausführungsform unterscheidet, dass die Nutzbreite **18** nicht der Breite **17** des Produktbereiches **9** entspricht. Die reduzierte Nutzbreite **18** resultiert aus einer produktionstechnisch durch die Walzenherstellung bedingten Abstufung in der äußeren Walzenkontur.

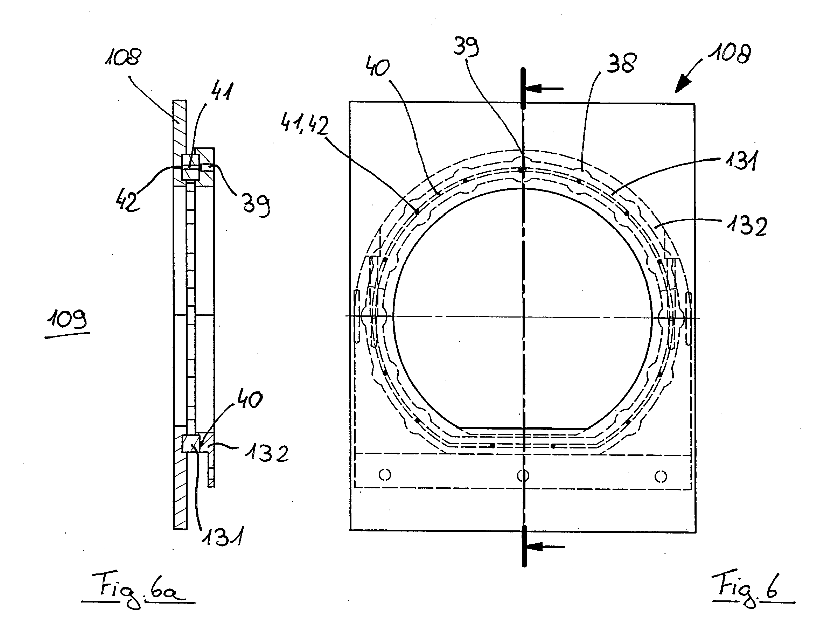

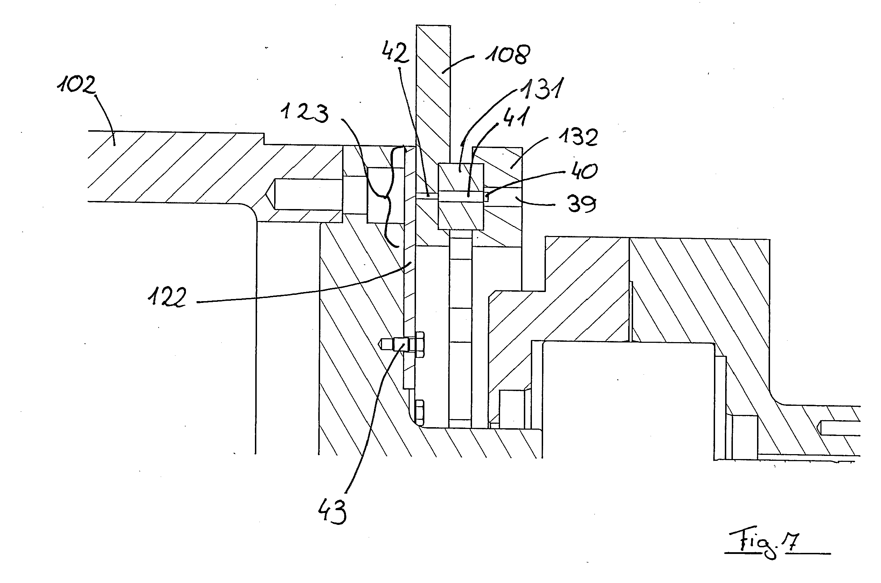

In der Figur 6 wird eine Begrenzungswand **108** von einer Seite her dargestellt, welche im eingebauten Zustand zu einer Walze **102** gemäß Figur 7 hin ausgerichtet ist. Auf der gegenüberliegenden Seite befindet sich eine nutartige Ausnehmung, in welche der Dichtungsring **131** eingesetzt ist, wobei der Dichtungsring **131** zwischen der Begrenzungswand **108** und dem Dichtungsring **132** angeordnet ist. Mit Ausnahme eines abgeflachten Endes **37** des Dichtungsringes **131** ist dieser ringförmig ausgestaltet. An dem Dichtungsring **131** befinden sich Wölbungen **38,** welche eine Versteifung und Formschlussverbindung des Dichtungsringes **131** in der analog geformten Ausnehmung in der Begrenzungswand **108** bewirken, sodass sich der Dichtungsring **131** nicht verdrehen und während der Walzenrotation eine Kraftübertragung zwischen dem Dichtungsring **131** und der Begrenzungswand **108** sowie dem Dichtungsring **131** und dem Dichtungsring **132** stattfinden kann.

In dem Dichtungsring **132** befindet sich eine Bohrung **39,** durch welche das Fluid in eine in dem Dichtungsring **132** vorhandene Nut **40** eingeleitet wird. Die Nut **40** ist auf einer dem Dichtungsring **131** zugewandten Seite des Dichtungsrings **132** kreisförmig angeordnet. Damit das Fluid weiter in Richtung des Produktbereichs geleitet werden kann, befinden sich in dem Dichtungsring **131** und in der Begrenzungswand **108** Löcher **41, 42.** Die Löcher **41, 42** sind kreisförmig angeordnet, sodass die Löcher **41, 42** miteinander sowie mit der Nut **40** in dem Dichtungsring **132** korrespondieren. Das Fluid wird mit einem Druck von **0,1** bis **0,2** bar durch die Dichtungsringe **131, 132** und die Begrenzungswand **108** in den Produktbereich geleitet.

Die Figur 6a zeigt einen Schnitt durch die in Figur 6 dargestellte Begrenzungswand **108,** den Dichtungsring **131** und den Dichtungsring **132.** Durch die Bohrung **39** wird das Fluid in die Nut **40** geleitet, bevor es durch die Löcher **41** in dem Dichtungsring **131** und die Löcher **42** in der Begrenzungswand **108** in den Produktbereich **109** geführt wird.

In der Figur 7 ist ein detaillierter Ausschnitt einer Walze **102** mit der daran befindlichen Gleitscheibe **122** sowie der Begrenzungswand **108** und den beiden Dichtungsringen **131, 132** dargestellt. Die Gleitscheibe **122** ist mittels einer Schraubenverbindung **43** an der Walze **102** befestigt.

Während die Walze **102** sich dreht, "gleitet" die Gleitscheibe **122** über einen Abschnitt **123** der Begrenzungswand **108.** Um den Verschleiß der Gleitscheibe **122** und den Abschnitt **132** der Begrenzungswand **108** möglichst gering zu halten, besteht zumindest eines der beiden Bauteile oder bestehen beide aus einem reibungsarmen (Kunststoff-)Material, vorzugsweise aus PTFE.

Eine weitere Reduzierung des Verschleißes wird durch eine von dem Fluid verursachte Kühlung ermöglicht. Das Fluid wird von der in dem Dichtungsring **132** befindlichen Bohrung **39** in die Nut **40** des Dichtungsrings **132** in die Löcher **41** des Dichtungsringes **131** und die Löcher **42** in der Begrenzungswand **108** in den Produktbereich **109** geleitet. Eine weitere Aufgabe des Fluids besteht darin, dass keine Lebensmittelmasse zwischen die Gleitscheibe **122** und der Begrenzungswand **108** gelangen kann oder wieder hinaus gefördert wird. Ein Teil des Fluids strömt auch in radialer Richtung nach innen aus dem Spaltbereich zwischen Gleitscheibe **122** und Begrenzungswand **108** heraus.

### Bezugszeichenliste

- 1: Walzenreibmaschine
- 3: 2, 102 WalzeMittelteil
- 4: Walzenachse
- 5: Maschinengestell
- 6: Gehäusewand
- 7: Lagerbereich
- 8, 108: Begrenzungswand
- 9, 109: Produktbereich
- 10: Mantelfläche
- 11: Produktabschnitt
- 12: Lagerabschnitt
- 13: Endabschnitt
- 14: Wellenzapfen
- 15: Durchführung
- 16: Lager
- 17: Breite
- 18: Nutzbreite
- 19: Abstufung
- 20: Walzenspalt
- 21: Stirnfläche
- 22, 122: Gleitscheibe
- 23, 123: Abschnitt
- 24: Dichtungsgehäuse
- 25: Bohrung
- 26: Durchgang
- 27: Randstreifen
- 28: Lagerschwinge
- 29: Schenkachse
- 30: Anschlag
- 31, 131: Dichtungsring
- 32, 132: Dichtungsring
- 33: Wand
- 34: Dichtung
- 35: Druckkammer
- 36: Spalt
- 37: Ende
- 38: Wölbungen
- 39: Bohrung
- 40: Nut
- 41: Loch
- 42: Loch
- 43: Schraubenverbindung

- R_{D}: Radius der Abdichtung
- R_{S}: Radius der Stirnfläche
- R_{W}: Radius der Walze
- D_{W}: Dichtfläche der Begrenzungswand
- D_{B}: Dichtfläche der Stirnwand

## Patentansprüche

1. Walzenreibmaschine (1) zum Vermahlen einer teigig-pastösen Lebensmittelmasse mit mehreren parallel zueinander ausgerichteten, hinter- und/oder übereinander in einem Maschinengestell (5) angeordneten Walzen (2, 102), die mit Hilfe mindestens einer Antriebseinrichtung um eine Walzenachse (4) drehantreibbar sind, so dass die zu vermahlende Lebensmittelmasse in Form eines zusammenhängenden Produktfilms durch zumindest einen zwischen zwei benachbarten Walzen (2, 102) befindlichen Walzenspalt (20) förderbar ist, wodurch ein Vermahlen der Lebensmittelmasse erfolgt, wobei die Walzenreibmaschine (1) einen Produktbereich (9, 109) aufweist, in dem die zu vermahlende Lebensmittelmasse mit Oberflächen sowohl mindestens einer der Walzen (2, 102) als auch von Begrenzungswänden (8, 108) in Kontakt kommt, wobei jede Walze (2, 102) an gegenüberliegenden Endabschnitten (13) jeweils einen Lagerabschnitt (7) aufweist, mit dem sich die Walze (2, 102) jeweils in einen Lagerbereich (7) der Walzenreibmaschine (1), insbesondere deren Maschinengestells (5), hinein erstreckt, wobei die Lagerbereiche (7) von dem Produktbereich (9, 109) abgetrennt sind und jeweils zwei Durchführungen (15) jeder Walze (2, 102) von dem Produktbereich (9, 109) in die der jeweiligen Walze (2, 102) zugeordneten Lagerbereiche (7) gegen einen Durchtritt der zu vermahlenden Lebensmittelmasse abgedichtet sind, **dadurch gekennzeichnet, dass** eine Abdichtung des Produktbereichs (9, 109) zu einem jeweiligen Lagerbereich (7) an einer radial ausgerichteten Stirnfläche (21) der jeweiligen Walze (2) angeordnet ist und ein radiales Außenmaß (R_{D}), von der Walzenachse (4) aus gemessen, von mindestens 80 %, vorzugsweise mindestens 90 %, eines Radius (R_{W}) der Walze (2, 102) in dem Abschnitt, in dem sich der Walzenspalt (20) befindet, aufweist.

2. Walzenreibmaschine (1) nach Anspruch 1, **dadurch gekennzeichnet, dass** die Abdichtung des Produktbereichs (9, 109) an eine Mantelfläche (10) der Walze (2, 102) im Bereich des Walzenspalts (20) angrenzt.

3. Walzenreibmaschine (1) nach Anspruch 1 oder 2, **dadurch gekennzeichnet, dass** die Abdichtung von zwei radial ausgerichteten aufeinander gleitenden Dichtflächen (D_{W}, D_{B}) gebildet ist, die zum einen an der radial ausgerichteten Stirnfläche (21) der Walze (2, 102) und zum anderen an einer radial ausgerichteten Begrenzungswand (8, 108) des Produktbereichs (9, 109) angeordnet sind.

4. Walzenreibmaschine (1) nach einem der Ansprüche 1 bis 3, **dadurch gekennzeichnet, dass** eine Nutzbreite (18), das heißt, die Breite (17) des Walzenspalts (20) einer von zwei benachbarten Walzen (2, 102) gebildeten Walzenpaarung einer Breite (17) des Produktbereichs (9, 109) an der Stelle des dem Walzenpaar zugeordneten Walzenspalts (20) entspricht.

5. Walzenreibmaschine (1) nach Anspruch 3 oder 4, **dadurch gekennzeichnet, dass** die Walze (2, 102) an gegenüber liegenden Seiten jeweils mit einer koaxial zu der Walze (2, 102) ausgerichteten Gleitscheibe (22, 122) versehen ist, an der eine Dichtfläche (D_{W}) angeordnet ist und die vorzugsweise drehfest mit der übrigen Walze (2, 102), vorzugsweise formschlüssig, verbunden ist.

6. Walzenreibmaschine (1) nach Anspruch 5, **dadurch gekennzeichnet, dass** die Gleitscheibe (22, 122) aus Edelstahl besteht und vorzugsweise eine in axiale Richtung gemessene Dicke zwischen 2 mm und 5 mm besitzt.

7. Walzenreibmaschine (1) nach mindestens einem der Ansprüche 3 bis 5, **dadurch gekennzeichnet, dass** die Begrenzungswand (8, 108) des Produktbereichs (9, 109) eine Bohrung (25) zum Durchtritt eines in den Lagerabschnitt (12) führenden Wellenzapfens (14) aufweist, wobei ein die Bohrung (25) begrenzender, radial ausgerichter umlaufender Randstreifen (27) der Begrenzungswand (8, 108) eine Dichtfläche bildet.

8. Walzenreibmaschine (1) nach mindestens einem der Ansprüche 3 bis 7, **dadurch gekennzeichnet, dass** ein Abschnitt (23, 123) der Begrenzungswand (8, 108) zumindest im Bereich der von dieser gebildeten Dichtfläche (D_{W}) aus einem reibungsarmen und verschleißarmen Kunststoffmaterial, vorzugsweise aus PTFE oder PTFE Compound gebildet ist, wobei das Kunststoffmaterial vorzugsweise temperaturbeständig ist.

9. Walzenreibmaschine (1) nach mindestens einem der Ansprüche 3 bis 7, **dadurch gekennzeichnet, dass** die Begrenzungswand (8, 108) insgesamt aus einem reibungsarmen und verschleißarmen Kunststoffmaterial, insbesondere PTFE oder PTFE Compound ausgebildet ist, wobei das Kunststoffmaterial vorzugsweise temperaturbeständig ist.

10. Walzenreibmaschine (1) nach mindestens einem der Ansprüche 3 bis 9, **dadurch gekennzeichnet, dass** ein die Dichtfläche (D_{B}) der Begrenzungswand (8, 108) bildendes, vorzugsweise eine zu einer Walzenachse (4) koaxiale Bohrung aufweisendes Bauteil in axiale Richtung gegen die zugeordnete Dichtfläche (D_{W}) an der radial ausgerichteten Stirnwand (21) der Walze (2, 102) andrückbar ist, wobei das Andrücken vorzugsweise mittels eines Dichtungsringes (31, 131), vorzugsweise bestehend aus Weichkunststoff, weiter vorzugsweise aus Silikon, und/oder mittels eines unter Druck stehenden Fluids, insbesondere Luft, erfolgt.

11. Walzenreibmaschine (1) nach mindestens einem der Ansprüche 3 bis 10, **dadurch gekennzeichnet, dass** ein einer Walze (2, 102) zugeordneter Abschnitt (23) der Begrenzungswand (8, 108) insgesamt in Richtung auf die eine Dichtfläche (D_{W}) bildende radial ausgerichtete Stirnfläche (21) der Walze (2) andrückbar ist, wobei vorzugsweise mehrere Abschnitte (23, 132) einer Begrenzungswand (8, 108) in Bereich des jeweiligen Walzenspalts (20) unmittelbar aneinander angrenzen und vorzugsweise gegeneinander abgedichtet sind.

12. Walzenreibmaschine (1) nach mindestens einem der Ansprüche 2 bis 11, **gekennzeichnet durch** eine mit dem Fluid beaufschlagbare Druckkammer (35), die in axiale Richtung einerseits von einer der Walze (2, 102) abgewandten Innenseite der Begrenzungswand (9, 109) und andererseits von einer Stirnfläche (21) eines mit dem Maschinengestell (5) verbundenen Dichtungsgehäuses (24) und in radiale Richtung nach innen von dem sich von der Begrenzungswand (8, 108) zu dem Dichtungsgehäuse (24) erstreckenden Dichtungsring (31, 131) begrenzt wird, der vorzugsweise **durch** einen Anschlag (30) an dem Dichtungsgehäuse (24) gegen axiale Verschiebung in Richtung auf den Produktbereich (9, 109) zu gesichert und vorzugsweise in Umfangsrichtung geteilt ist.

13. Walzenreibmaschine (1) nach mindestens einem der Ansprüche 2 bis 12, **dadurch gekennzeichnet, dass** eine Druckkammer (35) zur Beaufschlagung mindestens zweier jeweils eine Dichtfläche (D_{B}) der Begrenzungswand (8, 108) bildender Bauteile, wobei die Dichtflächen (D_{B}) benachbarten Walzen (2, 102) zugeordnet sind, oder zur Beaufschlagung mindestens zweier benachbarter Begrenzungswände (8, 108) insgesamt vorgesehen ist, wobei vorzugsweise die Druckkammer (35) im Bereich jeder Bohrung (25) der Begrenzungswand (8, 108) von jeweils einem Dichtungsring (31, 131) begrenzt ist.

14. Walzenreibmaschine (1) nach Anspruch 12 oder 13, **dadurch gekennzeichnet, dass** während des Betriebs der Walzenreibmaschine (1) das Fluid, vorzugsweise Gas, aus der Druckkammer (35) in den Produktbereich (9, 109) und/oder die Umgebung leitbar ist, wobei entweichendes Fluid von einer unter Druck stehenden Fluidquelle nachführbar ist.

15. Walzenreibmaschine (1) nach mindestens einem der Ansprüche 12 bis 14, **dadurch gekennzeichnet, dass** an dem Dichtungsgehäuse (24) ein Dichtungsring (32, 132) angeordnet ist, der die Druckkammer (35) in eine Richtung von dem Produktbereich (9, 109) weg begrenzt.

16. Walzenreibmaschine (1) nach mindestens einem der Ansprüche 2 bis 15, **dadurch gekennzeichnet, dass** das Dichtungsgehäuse (24) radial innerhalb der an der Begrenzungswand (8) angeordneten Dichtfläche (D_{B}) eine umlaufende Dichtfläche aufweist, die in gleitendem Kontakt mit der radial ausgerichteten Stirnfläche (21) der Walze (2, 102) oder der Gleitscheibe (22, 122) steht.

17. Walzenreibmaschine (1) nach mindestens einem der Ansprüche 2 bis 16, **dadurch gekennzeichnet, dass** mindestens zwei Walzen (2) relativ zueinander in radiale Richtung unter Veränderung der Größe des Walzenspaltes (20) bewegbar sind, wobei die Begrenzungswand (8) oder die Abschnitte (23, 123) der Begrenzungswand (8) relativ zu den Walzen (2, 102) feststeht bzw. feststehen.

18. Walzenreibmaschine (1) nach mindestens einem der Ansprüche 1 bis 17, **dadurch gekennzeichnet, dass** sich innerhalb jedes Dichtungsgehäuses (24) eine Lagerschwinge (28) mit einem Lager (16) für einen Wellenzapfen (14) der Walze (2, 102) befindet, wobei eine Verschwenkung der Lagerschwinge (28) um eine von der Walzenachse (4) beabstandete Schwenkachse (29) eine Relativbewegung zwischen der zugeordneten Walze (2, 102) und dem Maschinengestell (5) und/oder dem vorzugsweise damit verbundenen Dichtungsgehäuse (24) bewirkt.
